# EUROPÄISCHE PATENTSCHRIFT

(11) **EP 2 571 679 B1**
(45) Veröffentlichungstag und Bekanntmachung des Hinweises auf die Patenterteilung: **13.07.2016**
(21) Anmeldenummer: 11733597.6
(22) Anmeldetag: 16.05.2011
(51) Int. Cl.: B31B 19/00, B23K 26/08, B23K 26/082, B23K 26/38, B23K 26/402

(54) **VORRICHTUNG UND VERFAHREN ZUR ERZEUGUNG VON SCHLAUCHABSCHNITTEN ZUR HERSTELLUNG VON BEUTELN**
APPARATUS AND METHOD FOR PRODUCING TUBULAR SECTIONS FOR MANUFACTURING BAGS
DISPOSITIF ET PROCÉDÉ POUR PRODUIRE DES SECTIONS DE TUBE POUR LA FABRICATION DE SACS

(30) Priorität: 19.05.2010 DE 102010029139
(43) Veröffentlichungstag der Anmeldung: 27.03.2013
(73) Patentinhaber: Windmöller & Hölscher KG, 49525 Lengerich (DE)
(72) Erfinder: THIES, Jörg Christian, 49201 Dissen (DE)
(86) Internationale Anmeldenummer: PCT/EP2011/057844
(87) Internationale Veröffentlichungsnummer: WO 2011/144555

(56) Entgegenhaltungen:
- EP-A1- 0 443 646
- WO-A1-2008/138370
- DE-A1- 10 038 104
- DE-A1-102008 017 726
- US-A- 6 038 487
- US-A1- 2010 029 455
- US-B1- 6 191 382

## Beschreibung

Die Erfindung betrifft eine Vorrichtung zur Erzeugung von Schlauchabschnitten, welche im Wesentlichen Papier umfassen, zur Herstellung von Beuteln nach dem Obergriff des Anspruchs 1 sowie ein Verfahren nach dem Oberbegriff des Anspruchs 10.

Zur Herstellung von Beuteln wird zunächst eine Bahn in einer Abwickelvorrichtung abgewickelt. Diese Bahn besteht im Wesentlichen aus Papier, jedoch können auch Bereiche, etwa für Sichtfenster, aus Kunststoff vorgesehen sein. In einer Perforationseinrichtung sind verschiedene Perforationen in die Bahn eingebracht. Eine dieser Perforationen verläuft von einem Rand zum zweiten Rand, um später die Bahn entlang dieser Perforationen zur Bildung einzelner Bahn- oder Schlauchabschnitte in einer Vereinzelungseinrichtung abreißen zu können. Vor diesem Abreißen wird die Bahn jedoch in der Regel zu einem Schlauch zusammengelegt. Die vereinzelten Schlauchabschnitte erhalten später einen Boden und bilden dann Beutel. Die Patentanmeldung DE 10 2005 052 129 der Anmelderin offenbart eine solche Vorrichtung.

Bekannte Perforationseinrichtungen umfassen Perforiermesser, die je nach gewünschter Perforationskontur angepasst, das heißt ausgewechselt werden müssen. Dies verursacht lange Stillstandszeiten, in denen die Maschine nicht produzieren kann. Auch müssen für die verschiedenen Konturen und/oder Bahnbreiten verschiedene Messer und deren Halter im Lager bereitgehalten werden. Außerdem unterllegen die Perforiermesser einem Verschleiß. Weder lange Stillstandszeiten noch eine Lagerbereithaltung noch der Verschleiß sind gewünscht.

Die US 2010/029455 A1 offenbart, dass die Perforationseinrichtung zumindest eine Laserstrahleinrichtung umfasst, mit welcher zumindest ein Laserstrahl zur Einbringung der Perforationen auf die Bahn leitbar ist. Bei unterschiedlichen Breiten der Schlauchbahn muss jedoch auch die Arbeitsbreite der Laserstrahleinrichtung angepasst werden, was mit tellwelse komplizierten und teuren Aufbauten einhergeht.

Das Patent US 6 038 487 schlägt vor, den Querschnitt der Bahn in eine Kreisbogenform zu bringen, was jedoch einen hohen mechanischen Aufwand hervorruft, da entsprechende Führungselemente vorgesehen werden müssen.

Die EP 443 646 A1 schlägt vor, die Bahn zwischen zwei Walzen durchhängend zu transportieren. Dabei muss aber ständig der Abstand der Bahn zur Laserstrahleinrichtung gemessen und eingestellt werden.

Die Aufgabe der vorliegenden Erfindung ist es daher, eine Vorrichtung und ein Verfahren vorzuschlagen, die die genannten Nachteile vermeiden.

Die Aufgabe wird gelöst durch eine Vorrichtung, die neben den Merkmalen des Oberbegriffs des Anspruchs 1 auch diejenigen des kennzeichnenden Teils des Anspruchs 1 umfasst, und durch ein Verfahren nach Anspruch 10.

Demnach ist vorgesehen, dass die Bahn (3) über Bahnführungs- oder Bahnumlenkeinrichtungen (32, 33) führbar ist, welche in ihrer relativen Lage zur Laserstrahleinrichtung (35) veränderbar sind, wobei die Entfernung der Bahn zur Laserstrahleinrichtung einstellbar ist und wobei mit dem Laserstrahl nur ein bestimmter Winkel quer zur Transportrichtung der Bahn überstreichbar ist

Eine Laserstrahleinrichtung zeichnet sich dadurch aus, dass sie stark kohärentes und gebündeltes Licht aussendet. Aufgrund der genannten Eigenschaften des Lichts ist dieses sehr energiereich und damit in der Lage, in den Bereichen, in denen es auf die Bahn auftrifft, das Bahnmaterial zu entfernen. Das Licht wird dabei mittels eines oder mehrerer schnell bewegter Spiegel auf verschiedene Stellen der Bahn gelenkt, so dass verschiedenartige Schnitte erzeugbar sind. Beispielsweise sind sehr feine Perforationsschnitte herstellbar, die nach dem Abriss kaum mehr als solche wahrnehmbar sind. Die derart hergestellten Beutel weisen also ein schöneres Aussehen auf. Außerdem ergibt sich oft eine größere Stabilität der perforierten Materialbahn. Dies gilt insbesondere bei der Verwendung von Folienbestandteilen.

Die so verbesserte Vorrichtung vermeidet Stillstandszeiten für einen Messerwechsel. Nun brauchen nur noch Bewegungsdaten für den Spiegel und/oder Lasereinrichtung angegeben zu werden. Auf deren Basis steuert eine Steuereinrichtung die Aktoren für den Spiegel an. Solche Bewegungsdaten können natürlich auch auf der Basis verschiedener Parameter berechnet werden. Da vielfältige Bewegungen möglich sind, lässt sich entsprechend die Perforationskontur wesentlich vielfältiger gestalten.

Da keine Messer mehr notwendig sind, entfällt eine Lagerhaltung. Auch ein Verschleiß von Messern und anderen Bauteilen, wie etwa einer Gegenwalze, hat keine Bedeutung mehr.

Der Vorteil der Erfindung wird im Folgenden deutlich: Mit der eingangs genannten Vorrichtung zur Erzeugung von Schlauchabschnitten werden in der Regel Schläuche oder Bahnen verschiedener Breiten verarbeitet. Der von der Laserstrahleinrichtung auf die Bahn geleitete Laserstrahl kann aber nur eine bestimmte Maximalbreite der Bahn abdecken, da ein großer Stellbereich des zum Umleiten des Strahls notwendigen Spiegels große Stellwege notwendig machen würde. Dieser Stellbereich ist daher beschränkt. Bei großer Entfernung der Bahn zur Laserstrahleinrichtung kann auch eine breite Bahn in ihrer gesamten Breite bestrahlt werden. Eine kleine Entfernung der Bahn ist allerdings wünschenswert, da der Strahl besser fokussiert und damit die Strahlungsenergie effizienter übertragbar ist. Um nun die Entfernung so klein wie möglich zu halten, und um dabei den Strahl auch über die gesamte Breite der Bahn führen zu können, ist es von besonderem Vorteil, die Bahnführungs- oder Bahnumlenkeinrichtung in ihrer relativen Lage zur Laserstrahleinrichtung veränderbar auszugestalten.

In einer besonders vorteilhaften Weiterbildung der Erfindung ist vorgesehen, dass die Bahnführungs- oder Bahnumlenkeinrichtungen in einem Rahmen gelagert sind, welcher in einer Verstellrichtung verstellbar ist, die senkrecht zur Ebene der Bahn verläuft.

In einer weiteren Ausgestaltung der Erfindung ist vorgesehen, dass die zumindest eine Bahnführungs- oder Bahnumlenkeinrichtung zumindest ein Breitstreckelement umfasst. Bei herkömmlichen Perforiermessern läuft die Bahn, wie bereits erwähnt, über eine Gegendruckwalze. Eine solche Gegendruckwalze oder ein wie auch immer geartetes Gegenelement ist bei der Verwendung von Laserlicht nachteilig, da Letzteres dem Gegenelement

Schäden zufügen kann. Daher ist vorgesehen, die Bahn durch das Breitstreckelement in Querrichtung unter einer gewissen Spannung zu halten, damit das Laserlicht auf eine ebene Bahn trifft. Auf diese Weise kann für einen guten Perforationsschnitt Sorge getragen werden. Dem gleichen Zweck dient eine Einrichtung zur Regelung oder Steuerung der Bahnspannung, die für eine passende Bahnspannung in Längsrichtung sorgt.

In einem weiteren, vorteilhaften Ausführungsbeispiel der Erfindung ist vorgesehen, dass die Bahnführungs- oder Umlenkeinrichtung über zumindest ein Führungsblech oder zumindest einen Führungstisch verfügt. Solche Führungsbleche oder Führungstische sind in der Lage, die Bahn entlang einer Ebene zu führen, so dass mit dem Laserlicht ein gutes Schneidergebnis erzielt wird. Selbstverständlich muss bei dieser Anordnung dafür Sorge getragen werden, dass das Laserlicht die genannten Führungselemente nicht beschädigt.

Daher sind in einer weiteren Ausgestaltung Führungsbleche vorgesehen, die in den Bereichen, die der Laserstrahl überstreicht, mit Aussparungen versehen sind. Bei einer solchen Anordnung ist es zudem vorteilhaft, wenn die Führungsbleche in Transportrichtung der Bahn gegeneinander verschiebbar sind. Dies ist notwendig, wenn die Traversiergeschwindigkeit des Lasers (also die Geschwindigkeit, mit der der Laser quer zur Transportrichtung der Bahn geführt wird) und/oder die Transportgeschwindigkeit der Bahn veränderbar sind. Sobald die Bahn bewegt wird, muss der Laserstrahl, der ja nur punktförmig ist, ebenfalls - zumindest teilweise - mit der Transportgeschwindigkeit der Bahn in deren Transportrichtung bewegt werden, wenn ein quer zur Bahn verlaufender Perforationsschnitt erzeugt werden soll.

Verteilhaft ist darüber hinaus, wenn die Perforationseinrichtung zumindest eine Absaugeinrichtung umfasst, um einerseits entstehenden Papierstaub, andererseits auch Ausschnitte oder abgetrennte Abschnitte entfernen zu können.
Anstelle verschieb- oder in ihrer Lage veränderbarer Bahnführungs- oder Umlenkeinrichtungen kann vorgesehen sein, die Laserstrahleinrichtung in ihrer Lage relativ zur Bahn veränderbar vorzusehen.

Weitere Ausführungsbeispiele der Erfindung gehen aus der gegenständlichen Beschreibung und den Ansprüchen hervor.

Die einzelnen Figuren zeigen:
- Fig. 1: Seitenansicht einer Beutelmaschine des Standes der Technik
- Fig. 2: Seitenansicht einer ersten Ausführungsform einer erfindungsgemäßen Vorrichtung
- Fig. 3: Seitenansicht einer zweiten Ausführungsform einer erfindungsgemäßen Vorrichtung
- Fig. 4: Detailansicht der Perforierstation der Figuren 2 und 3
- Fig. 5a: Ansicht V-V aus Fig. 4 mit schmaler Bahn
- Fig. 5b: Ansicht V-V aus Fig. 4, jedoch mit breiter Bahn
- Fig. 6a: Ansicht VI-VI aus Fig. 4 mit kleiner Bahngeschwindigkeit
- Fig. 6b: Ansicht VI-VI aus Fig. 4 mit größerer Bahngeschwindigkeit
- Fig. 7: Seitenansicht einer weiteren Ausführungsform einer erfindungsgemäßen Vorrichtung

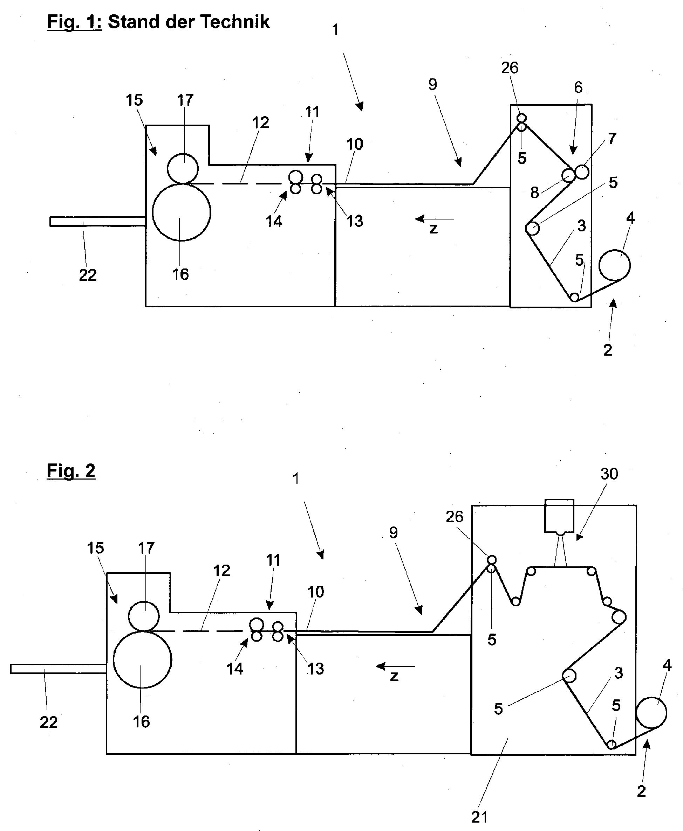

Fig. 1 zeigt eine Vorrichtung 1 zur Herstellung von Beuteln, wie sie aus dem Stand der Technik bekannt ist. In dieser Figur sind die wesentlichen Bestandteile dieser Vorrichtung schematisch gezeigt. Die Vorrichtung 1 umfasst eine Abwickeleinrichtung 2, welcher eine Materialbahn 3 in Form eines Wickels 4 zugeführt wird. Von diesem Wickel 4 ausgehend wird die Bahn 3 über Leitwalzen 5 der Querschneidestation 6 beziehungsweise Perforierstation 6 zugeführt. Diese Station 6 umfasst ein oder mehrere nicht näher dargestellte Querschneid- oder Querperforiermesser, welches auf einer Walze 7 umläuft. Die Materialbahn 3 läuft in dieser Station 6 über eine Gegendruckwalze 8, die vor allem den Zweck hat, den für den Schneid- oder Perforiervorgang notwendigen Gegendruck bereitzustellen. Bei diesem Schneid- oder Perforiervorgang wird die Bahn nicht durchtrennt, sondern mit Schwächungsschnitten oder -perforationen versehen, entlang welcher später der zu bildende Schlauch zur Vereinzelung in Schlauchstücke reißt. Auch können Perforationen, die zum späteren Abreißen einzelner weiterer Materialabschnitte von einem Schlauchstück dienen, in der beschriebenen Station 6 in die Materialbahn eingebracht werden. Hierzu kann die Walze 7 in bestimmten Bereichen Messer aufweisen, die parallel zueinander angeordnet sind.

Anschließend durchläuft die Materialbahn 3 einen Spalt, der von einer weiteren Leitwalze 5 und einer als Längsleimung 26 ausgebildeten Walze gebildet wird. Anstelle einer Walze kann die Längsleimung auch eine Leimauftragsdüse umfassen. Die Walze oder die Düse trägt Leim auf einen Seitenbereich der Materialbahn 3 auf, damit beide Seitenbereiche nach der Schlauchbildung, die im Folgenden beschrieben wird, dauerhaft miteinander verbunden sind.

In der nachfolgenden Schlauchbildungsstation 9 wird aus der Materialbahn 3 ein Schlauch 10 gebildet, indem die Bahn 3 mittels Führungselementen, wie beispielsweise Führungsblechen, seitlich eingeschlagen wird, so dass sich die Ränder der Materialbahn anschließend überlappen. Die sich überlappenden Bereiche wurden bereits mittels der Längsleimung 26 mit einem geeigneten Klebstoff versehen. Während des Einschlagens der Papierbahn können auch Seitenfalten eingelegt werden. Das Einlegen der Seitenfalten kann aber auch nach der Schlauchbildung erfolgen. Der Schlauch 10 wird nun meist in der Transportrichtung z weitergeführt.

Nachdem der Schlauch 10 erzeugt wurde, wird dieser in der Abreißstation 11 zu Schlauchstücken 12 vereinzelt. Dazu wird der Schlauch 10 durch den Walzenspalt eines ersten Walzenpaares 13 geführt. Während des weiteren Vorschubs des Schlauches gelangt dieser in den Walzenspalt eines zweiten Walzenpaares 14. Die Walzen des zweiten Walzenpaares haben ständig oder zumindest temporär eine größere Umfangsgeschwindigkeit als die Walzen des ersten Walzenpaares 13, deren Umfangsgeschwindigkeit mit der Transportgeschwindigkeit des Schlauches 10 übereinstimmt oder langsamer als diese ist. Wenn die von dem voraus laufenden Ende des Schlauches gesehen nächste Perforation den Walzenspalt des ersten Walzenpaares 13 passiert hat, greift das zweite Walzenpaar 14 an den Schlauch 10 an. Dieses kann erfolgen, indem das voraus laufende Ende des Schlauches in den Walzenspalt des zweiten Walzenpaares einläuft. Die Walzen des zweiten Walzenspaltes 14 können aber auch relativ, beispielsweise senkrecht, zum Schlauch 10 bewegt und an den Schlauch angelegt werden. Wenn die Walzen des zweiten Walzenspaltes 14 an den Schlauch anliegen, reißt der Schlauch entlang des Schnittes bzw. der Perforation.

Das vom Schlauch abgerissene Schlauchstück 12 gelangt nun in die Bodenbeleimungs- und Bodenumklappstation 15. Dazu wird das Schlauchstück 12 auf dem Bodenmacherzylinder 16 festgehalten. Durch ein geeignetes Element, beispielsweise durch eine Stange, wird die voraus laufende Lasche des Schlauchstücks, welche in der Regel Bestandteile der Unterseite ist und die Oberseite überragt, umgeklappt, so dass Teile der unteren Lage nach dem Umklappen auf der Außenseite der oberen Lage aufliegt. Zuvor werden die Lasche und/oder der Bereich der Außenseite der oberen Lage, auf dem die Lasche nach dem Umklappen aufliegt, mit einem Klebstoff, beispielsweise mit Leim, versehen. Dazu dient die Leimauftragseinrichtung, die in der Figur 1 durch den Leimzylinder 17 symbolisiert wird.

Nachdem die Beutel soweit fertig gestellt wurden, wird der Beutel vom Bodenmacherzylinder auf einem Tisch 22 abgestellt. Dabei werden die Beutel in der Regel senkrecht stehend angeordnet. Von diesem Tisch 22 können die Beutel dann stapelweise auf eine geeignete Weise entnommen werden.

Die Figur 2 zeigt eine erfindungsgemäße Vorrichtung, bei der die bekannte Perforierstation 6 durch eine solche Perforierstation 30 ersetzt wurde, die anstelle mit einem Messer die Bahn 3 mit einem Laserstrahl bearbeitet. Diese Station kann in dem Maschinengestell 21 etwa an die Stelle der bekannten Perforierstation treten.

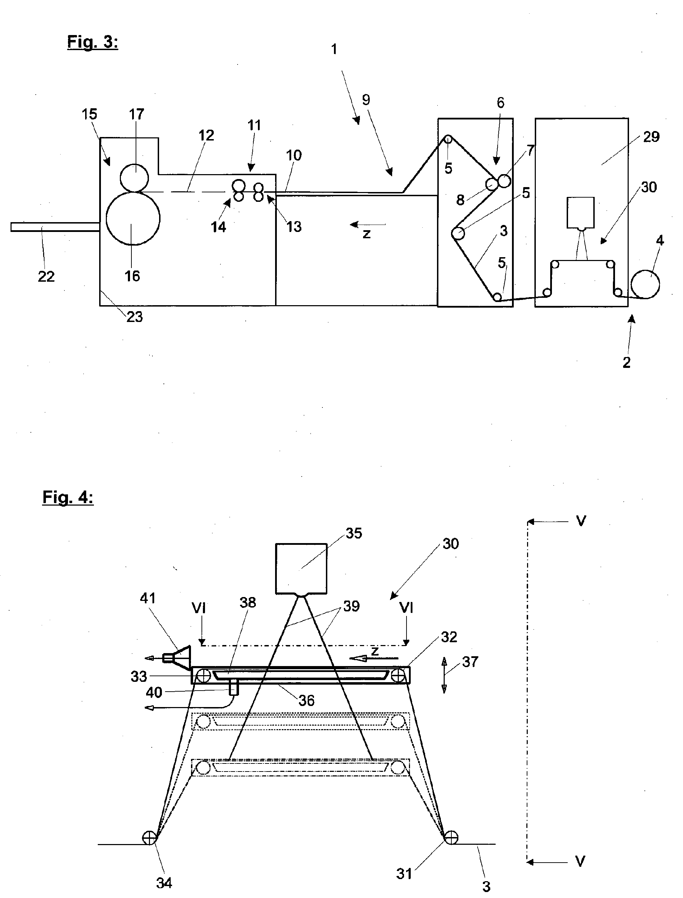

In der Figur 3 ist eine alternative Anordnung der Perforierstation 30 in der erfindungsgemäßen Vorrichtung gezeigt. Hier ist ein separates Gestell 29 vorgesehen, in welchem die Perforierstation 30, aber auch die Abwicklung 4 angeordnet ist. Der Vorteil einer solchen Anordnung ist, dass vorhandene Maschinen des Standes der Technik durch Hinzufügung eines Gestells 29 in eine erfindungsgemäße Vorrichtung umgerüstet werden können. Der Aufbau und die Funktion der Perforierstation 30 sind unabhängig von der Anordnung identisch und werden im Folgenden anhand der weiteren Figuren näher erläutert.

Die Figur 4 zeigt die Perforierstation 30 in vergrößerte Ansicht. Die Bahn 3 wird zunächst über die Umlenkwalze 31 geführt und passiert dann die Umlenkwalze 32, welche die Bahn 3 in eine vorzugsweise horizontale Ebene umlenkt. Von Vorteil ist es, wenn die Umlenkwalze 32 als Breitstreckwalze ausgebildet ist, um die Bahn 3 quer zu ihrer Richtung zu strecken, so dass sie in einer Ebene verbleibt. Die nachfolgende Walze 33 ist wiederum eine vorteilhafterweise als Breitstreckwalze ausgebildete Umlenkwalze, welche die Bahn zur Umlenkwalze 34 führt. Vorzugsweise oberhalb der durch die Bahn 3 festgelegten Ebene ist eine Laserstrahleinrichtung 35 angeordnet. Diese Laserstrahleinrichtung 35 umfasst eine Laserstrahlungsquelle und einen oder mehrere Spiegel, mit denen der Laserstrahl 39 auf gewünschte Position auf der Bahn umlenkbar ist. Der oder die Spiegel sind vorzugsweise mit mechanischen Mitteln verstellbar. Solche Laserstrahleinrichtungen werden oft auch als Laserscanner bezeichnet. Die Laserstrahleinrichtung 35 ist so ausgelegt, dass der Laserstrahl in zwei Dimensionen bewegt werden kann.

Die Umlenkwalzen 32 und 33 können in einem Rahmen 36 gelagert sein, welcher sich relativ zur Laserstrahleinrichtung verschieben lässt. Die bevorzugte Verstellrichtung, die senkrecht zur Ebene der Bahn 3 verläuft, wird durch den Pfeil 37 repräsentiert.

Der Rahmen 36 kann in mehreren Schienen verschieblich gelagert sein. Die Höhenverstellung selbst kann durch eine hand- oder elektromotorisch betriebene Spindelhubeinrichtung erfolgen. Mit der beschriebenen Höhenverstelleinrichtung kann sichergestellt werden, dass der Laserstrahl, der aufgrund der begrenzten Verstellbarkeit des Laserscanners nur einen bestimmten Winkel quer zur Transportrichtung z der Bahn überstreichen kann, auch bei größeren Bahnbreiten diese in ihrer Querrichtung vollständig perforieren kann. Die gestrichelte und die strichpunktierte Linie zeigen jeweils den Rahmen und die an ihm angeordneten Teile in in der Höhe verstellten Positionen.

Weiterhin kann eine Auffangwanne 38 vorgesehen sein, die sich vorteilhafterweise ebenfalls auf dem Rahmen 36 abstützt. An die Auffangwanne 38 kann ein Absaugstutzen 40 angebracht sein, über welchen sich mit einer Absaugeinrichtung Abfallstücke oder Papierstaub absaugen lassen. Ein weiterer Absaugstutzen 41 kann dem gleichen Zweck dienen.

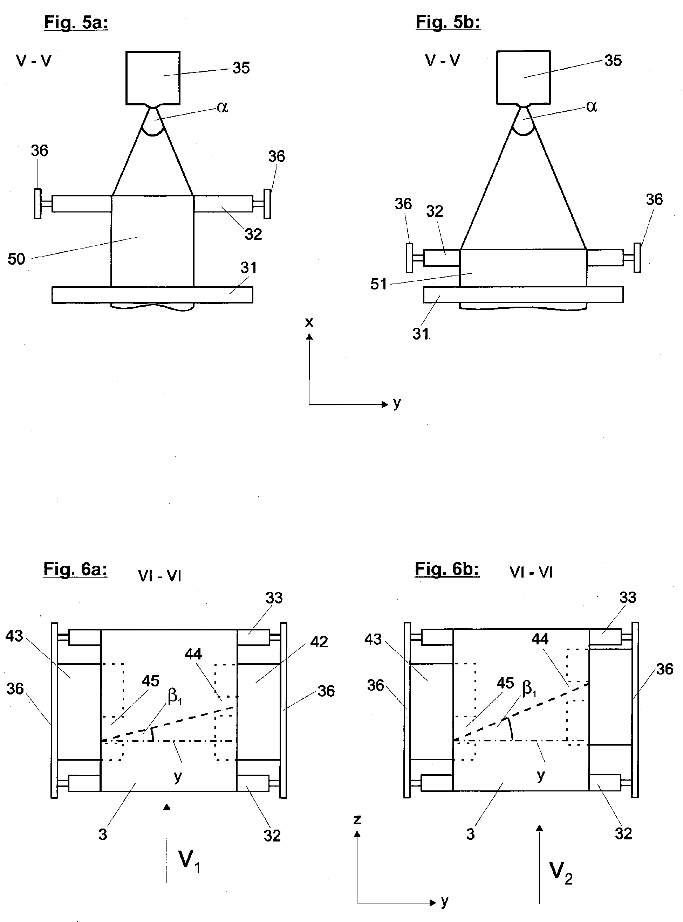

Die Figuren 5a und 5b zeigt die Ansicht V - V aus der Figur 4, wobei die Figur 5a die Höheneinstellung für eine schmale Bahn und die Figur 5b die Höheneinstellung für eine breite Bahn zeigt. Der Winkel α, welchen der Laserstrahl 39 überstreichen kann, ist stets derselbe.

Die Figuren 6a und 6b zeigen eine weitere Ausführungsform der Erfindung. Die über die Walzen 32 und 33 geführte Bahn 3 wird zusätzlich an ihren Rändern durch Bleche 42 und 43 unterstützt. Die Bleche weisen Aussparungen 44 und 45 auf, über welche der Laserstrahl 39 geführt werden kann, um nicht das Blech durch die Strahlung zu beschädigen.

Zumindest eines der Bleche kann in und entgegen der Transportrichtung der Bahn z bewegt werden. Auf diese Weise kann ein Laser unter verschiedenen Winkeln b relativ zur Querrichtung y der Bahn bewegt werden. Bei gleich bleibender Traversiergeschwindigkeit des Laserstrahls kann dieser Winkel in Abhängigkeit der Bahngeschwindigkeit v eingestellt werden. So ist in der Figur 6a eine erste Bahngeschwindigkeit v₁ eingestellt, welche einen ersten Winkel β₁ notwendig macht. Bei einer gegenüber v₁ größeren Bahngeschwindigkeit v₂ ist entsprechend der Winkel β₂, welcher größer ist als β₁, einzustellen. Dementsprechend wurde in der Fig. 6b das Blech 42 in Transportrichtung z verschoben, so dass der Laserstrahl auch bei dem veränderten Winkel β₂ in die Aussparung trifft und nicht das Blech in Mitleidenschaft zieht.

Das oder die Bleche können händisch verschiebbar ausgestaltet sein. Sinnvoll ist allerdings eine motorische, beispielsweise eine elektromotorische Verstelleinrichtung, die von einer Steuereinrichtung, die auch den Laserstrahl steuert, ansteuerbar ist.

Anstelle von zwei getrennten Blechen können auch mehrere gekoppelte Bleche vorgesehen werden, die über gemeinsame Verstellmechaniken verstellbar sind. So sind beispielsweise quer verlaufende Schwenkhebel denkbar, an die mehrere Bleche beweglich angeordnet sind. Anstelle von Blechen können auch andere geeignete Bauteile Verwendung finden, die geeignet sind, die Bahn so zu unterstützen, dass diese in einer einzigen Ebene liegt. Dies können beispielsweise Bürsten oder Röllchen sein.

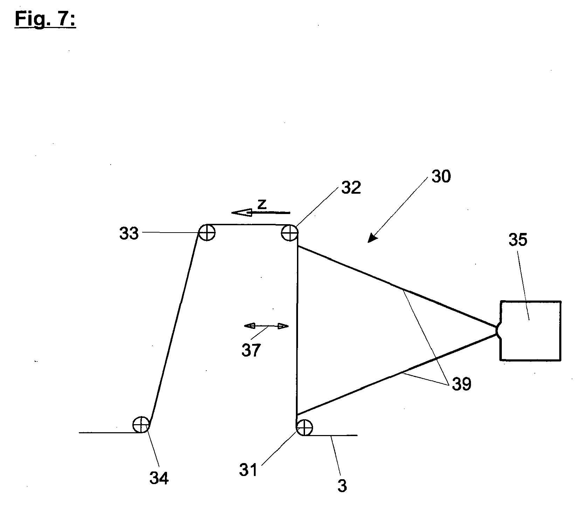

Die Figur 7 zeigt ein weiteres Ausführungsbeispiel der Erfindung. In diesem Fall strahlt der Laser 35 eher waagerecht, wobei die Bahn 3 senkrecht geführt wird. Der Doppelpfeil 37 zeigt nun in waagerechter Richtung. Das bedeutet, dass die Umlenkwalzen 31 und 32 in waagerechter Richtung in ihrer Lage relativ zur Laserstrahleinrichtung 35 veränderbar sind. Die Umlenkwalze 33 kann dagegen unverschlieblich gelagert sein. Weitere Anordnungen sind möglich der Bahnführungs- oder Bahnumlenkeinrichtungen sind möglich, welche sich in ihrer relativen Lage zur Laserstrahleinrichtung verändern lassen. Auch wenn diese Möglichkeiten nicht einzeln aufgeführt werden können, fallen sie unter den Gedanken der in dieser Anmeldung beschriebenen Erfindung.

| **Bezugszeichenliste** | |
|---|---|
| 1 | Vorrichtung zur Herstellung von Beuteln |
| 2 | Abwickeleinrichtung |
| 3 | Materialbahn |
| 4 | Wickel |
| 5 | Leitwalze |
| 6 | Querschneidestation/Perforierstation |
| 7 | Walze |
| 8 | Gegendruckwalze |
| 9 | Schlauchbildungsstation |
| 10 | Schlauch |
| 11 | Abreißstation |
| 12 | Schlauchstück |
| 13 | erstes Walzenpaar/Festhaltewalzenpaar |
| 14 | zweites Walzenpaar/Abreißwalzenpaar |
| 15 | Bodenbeleimungs- und -umklappstation |
| 16 | Bodenmacherzyl inder |
| 17 | Leimzylinder/Falzmesser |
| 18 | |
| 19 | |
| 20 | |
| 21 | Maschinengestell |
| 22 | Tisch |
| 23 | |
| 24 | |
| 25 | |
| 26 | Längsleimung |
| 27 | |
| 28 | |
| 29 | Gestell |
| 30 | Perforierstation |
| 31 | Umlenkwalze |
| 32 | Umlenkwalze |
| 33 | Umlenkwalze |
| 34 | Umlenkwalze |
| 35 | Laserstrahleinrichtung |
| 36 | Rahmen |
| 37 | Pfeil (zur Darstellung der Verstellrichtung) |
| 38 | Auffangwanne |
| 39 | Laserstrahl |
| 40 | Absaugstutzen |
| 41 | Absaugstutzen |
| 42 | Blech |
| 43 | Blech |
| 44 | Aussparung |
| 45 | Aussparung |
| | |
| α | Winkel |
| β₁, β₂ | Winkel |
| y | Querrichtung |
| **z** | Transportrichtung |

## Patentansprüche

1. Vorrichtung (1) zur Erzeugung von Schlauchabschnitten, welche im Wesentlichen Papier umfassen, zur Herstellung von Beuteln, wobei die Vorrichtung (1) wenigstens die folgenden Merkmale umfasst:
zumindest eine Abwickeleinrichtung (2), mit welcher eine Bahn (3) von einer Rolle, insbesondere eine Papierbahn, abwickelbar ist,
zumindest eine Perforationseinrichtung (6), mit welcher zumindest Perforationen in die Bahn (3) einbringbar sind, welche sich quer zur Transportrichtung (z) der Bahn (3) über diese erstrecken,
eine Schlauchbildungseinrichtung (9), welche im Produktionsablauf der zumindest einen Perforationseinrichtung (6) nachgeordnet ist und mit welcher die Ränder der Bahn (3) zur Bildung eines Schlauches (10) übereinander legbar sind,
eine Vereinzelungseinrichtung, mit welcher einzelne Schlauchabschnitte (12) entlang der Perforationen von dem Schlauch (10) abreißbar sind,
wobei die Perforationseinrichtung (6) zumindest eine Laserstrahleinrichtung (35) umfasst, mit welcher zumindest ein Laserstrahl (39) zur Einbringung der Perforationen auf die Bahn (3) leitbar ist
**dadurch gekennzeichnet, dass**
die Bahn (3) über Bahnführungs- oder Bahnumlenkeinrichtungen (32, 33) führbar ist, welche in ihrer relativen Lage zur Laserstrahleinrichtung (35) veränderbar sind, wobei die Entfernung der Bahn zur Laserstrahleinrichtung einstellbar ist und wobei mit dem Laserstrahl nur ein bestimmter Winkel quer zur Transportrichtung der Bahn überstreichbar ist.

2. Vorrichtung (1) nach Anspruch 1,
**dadurch gekennzeichnet, dass**
die Bahnführungs- oder Bahnumlenkeinrichtungen (32, 33) in einem Rahmen (36) gelagert sind, welcher in einer Verstellrichtung (37) verstellbar ist, die senkrecht zur Ebene der Bahn (3) verläuft..

3. Vorrichtung (1) nach dem vorstehenden Anspruch,
**dadurch gekennzeichnet, dass**
die zumindest eine Bahnführungs- oder Bahnumlenkeinrichtung in vertikaler Richtung verschiebbar ist.

4. Vorrichtung (1) nach einem der vorstehenden Ansprüche,
**dadurch gekennzeichnet, dass**
die Bahn (3) über zumindest eine Bahnführungs- oder Bahnumlenkeinrichtung führbar ist, welche zumindest ein Breitstreckelement umfasst.

5. Vorrichtung (1) nach einem der vorstehenden Ansprüche,
**dadurch gekennzeichnet, dass**
die Perforationseinrichtung (30) eine Einrichtung zur Regelung oder Steuerung der Bahnspannung umfasst.

6. Vorrichtung (1) nach einem der vorstehenden Ansprüche,
**dadurch gekennzeichnet, dass**
die Bahn (3) über zumindest eine Bahnführungs- oder Bahnumlenkeinrichtung führbar ist, welche über zumindest ein Führungsblech oder zumindest einen Führungstisch verfügt.

7. Vorrichtung (1) nach dem vorstehenden Anspruch,
**dadurch gekennzelchnet, dass**
zumindest zwei Führungsbleche (42, 43) vorgesehen sind, welche in Bereichen, welche der Laserstrahl (39) überstreicht, Aussparungen (44, 45) umfassen, wobei zumindest ein Führungsblech in Transportrichtung (z) der Bahn (3) verschiebbar ist.

8. Vorrichtung (1) nach einem der vorstehenden Ansprüche,
**dadurch gekennzeichnet, dass**
die Perforationseinrichtung (30) zumindest eine Absaugeinrichtung (40) umfasst.

9. Vorrichtung (1) nach einem der vorstehenden Ansprüche,
**dadurch gekennzeichnet, dass**
die Laserstrahleinrichtung (35) relativ zur Bahn (3) verschiebbar ist.

10. Verfahren zur Erzeugung von Schlauchabschnitten (12), welche Papier umfassen, zur Herstellung von Beutel, wobei:
• von einer Rolle eine Bahn (3), insbesondere eine Papierbahn, mit zumindest einer Abwickeleinrichtung (2) abgewickelt wird,
• Perforationen in die Bahn (3) mit zumindest einer Perforationseinrichtung (30) eingebracht werden, wobei sich die Perforationen zumindest quer (y) zur Transportrichtung (z) der Bahn (3) über diese erstrecken,
• die Ränder der Bahn (3) zur Bildung eines Schlauches (10) in einer Schlauchbildungseinrichtung (9), welche im Produktionsablauf der zumindest einen Perforationseinrichtung (9) nachgeordnet ist, übereinander gelegt werden,
• einzelne Schlauchabschnitte (12) entlang der Perforationen mit eine Vereinzelungseinrichtung von dem Schlauch (10) abgerissen werden,
• in der Perforationseinrichtung (9) zumindest ein Laserstrahl (39) zumindest einer Laserstrahleinrichtung (35) zur Einbringung der Perforationen auf die Bahn (3) geleitet wird
**dadurch gekennzeichnet, dass.**
die Bahn (3) über Bahnführungs- oder Bahnumlenkeinrichtungen (32, 33) geführt wird, welche in ihrer relativen Lage zur Laserstrahleinrichtung (35) verändert wird, wobei die Entfernung der Bahn zur Laserstrahleinrichtung einstellt wird und wobei mit dem Laserstrahl nur ein bestimmter Winkel quer zur Transportrichtung der Bahn überstrichen wird.

## Claims

1. Apparatus (1) for producing tubular sections, which substantially comprise paper, for manufacturing bags, the apparatus (1) comprising at least the following features:
at least one unwind device (2), with which a web (3) can be unwound from a roll, in particular a paper web,
at least one perforating device (6), with which at least perforations which extend over the web (3) transversely with respect to the transport direction (z) of the latter can be introduced into the web (3),
a tube-forming device (9), which is arranged downstream of the at least one perforating device (6) in the production sequence and with which the edges of the web (3) can be laid over each other in order to form a tube (10),
a separating device, with which individual tubular sections (12) can be torn off the tube (10) along the perforations,
the perforating device (6) comprising at least one laser beam device (35), with which at least one laser beam (39) can be guided onto the web (3) in order to introduce the perforations,
**characterized in that**
the web (3) can be led over web guiding or web deflecting devices (32, 33), of which the position relative to the laser beam device (35) can be varied, wherein the distance of the web from the laser beam device is adjustable and wherein the laser beam is able to sweep over only a specific angle transversely with respect to the transport direction of the web.

2. Apparatus (1) according to Claim 1,
**characterized in that**
the web guiding or web deflecting devices (32, 33) are mounted in a frame (36), which can be adjusted in an adjustment direction (37) which runs at right angles with respect to the plane of the web (3).

3. Apparatus (1) according to the preceding claim,
**characterized in that**
the at least one web guiding or web deflecting device can be displaced in the vertical direction.

4. Apparatus (1) according to one of the preceding claims,
**characterized in that**
the web (3) can be guided over at least one web guiding or web deflecting device which comprises at least one spreader element.

5. Apparatus (1) according to one of the preceding claims,
**characterized in that**
the perforating device (30) comprises a device for regulating or controlling the web tension.

6. Apparatus (1) according to one of the preceding claims,
**characterized in that**
the web (3) can be guided over at least one web guiding or web deflecting device which has at least one guide plate or at least one guide table.

7. Apparatus (1) according to the preceding claim,
**characterized in that**
at least two guide plates (42, 43) are provided, which comprise cut-outs (44, 45) in regions over which the laser beam (39) sweeps, wherein at least one guide plate can be displaced in the transport direction (z) of the web (3).

8. Apparatus (1) according to one of the preceding claims,
**characterized in that**
the perforating device (30) comprises at least one suction extraction device (40).

9. Apparatus (1) according to one of the preceding claims,
**characterized in that**
the laser beam device (35) can be displaced relative to the web (3).

10. Method for producing tubular sections (12), which substantially comprise paper, for manufacturing bags,
• a web (3), in particular a paper web, being unwound from a roll by at least one unwind device (2),
• perforations being introduced into the web (3) by at least one perforating device (30), the perforations extending over the web (3) at least transversely (y) with respect to the transport direction (z) of the latter,
• the edges of the web (3) being laid over each other to form a tube (10) in a tube-forming device (9), which is arranged downstream of the at least one perforating device (9) in the production sequence,
• individual tubular sections (12) being torn off the tube (10) along the perforations by a separating device,
• in the perforating device (9), at least one laser beam (39) from at least one laser beam device (35) being guided onto the web (3) in order to introduce perforations,
**characterized in that**
the web (3) is led over web guiding or web deflecting devices (32, 33), the position of which relative to the laser beam device (35) can be varied, wherein the distance of the web from the laser beam device is set, and wherein the laser beam is able to sweep over only a specific angle transversely with respect to the transport direction of the web.

## Revendications

1. Dispositif (1) pour produire des sections de tube, qui comprennent essentiellement du papier, pour la fabrication de sacs, dans lequel le dispositif (1) comprend au moins les caractéristiques suivantes:
- au moins un dispositif de déroulement (2), avec lequel une bande (3) peut être déroulée d'un rouleau, en particulier une bande de papier,
- au moins un dispositif de perforation (6), avec lequel on peut pratiquer dans la bande (3) au moins des perforations qui s'étendent sur celle-ci transversalement à la direction de transport (z) de la bande (3),
- un dispositif de formation de tube (9), qui dans l'ordre de production est disposé après ledit au moins un dispositif de perforation (6) et avec lequel les bords de la bande (3) peuvent être appliqués l'un sur l'autre pour la formation d'un tube (10),
- un dispositif d'individualisation, avec lequel des sections de tube individuelles (12) peuvent être détachées du tube (10) le long des perforations,
dans lequel le dispositif de perforation (6) comprend au moins un dispositif à faisceau laser (35), avec lequel au moins un faisceau laser (39) peut être dirigé sur la bande (3) pour y pratiquer les perforations, **caractérisé en ce que** la bande (3) peut être conduite sur des dispositifs de guidage de bande ou de déviation de bande (32, 33), dont la position relative par rapport au dispositif à faisceau laser (35) peut varier, dans lequel la distance entre la bande et le dispositif à faisceau laser est réglable et dans lequel seul un angle déterminé transversalement à la direction de transport de la bande peut être balayé avec le faisceau laser.

2. Dispositif (1) selon la revendication 1, **caractérisé en ce que** les dispositifs de guidage de bande ou de déviation de bande (32, 33) sont montés dans un cadre (36), qui est déplaçable dans une direction de déplacement (37), qui s'étend perpendiculairement au plan de la bande (3).

3. Dispositif (1) selon la revendication précédente, **caractérisé en ce que** ledit au moins un dispositif de guidage de bande ou de déviation de bande est déplaçable en direction verticale.

4. Dispositif (1) selon l'une quelconque des revendications précédentes, **caractérisé en ce que** la bande (3) peut être conduite sur au moins un dispositif de guidage de bande ou de déviation de bande, qui comprend au moins un élément élargisseur.

5. Dispositif (1) selon l'une quelconque des revendications précédentes, **caractérisé en ce que** le dispositif de perforation (30) comprend un dispositif pour le réglage ou la régulation de la tension de la bande.

6. Dispositif (1) selon l'une quelconque des revendications précédentes, **caractérisé en ce que** la bande (3) peut être conduite sur au moins un dispositif de guidage de bande ou de déviation de bande, qui comporte au moins une tôle de guidage ou au moins une table de guidage.

7. Dispositif (1) selon la revendication précédente, **caractérisé en ce qu'**il est prévu au moins deux tôles de guidage (42, 43), qui comprennent, dans des régions que le faisceau laser (39) balaie, des découpes (44, 45), dans lequel au moins une tôle de guidage est déplaçable dans la direction de transport (z) de la bande (3).

8. Dispositif (1) selon l'une quelconque des revendications précédentes, **caractérisé en ce que** le dispositif de perforation (30) comprend au moins un dispositif d'aspiration (40).

9. Dispositif (1) selon l'une quelconque des revendications précédentes, **caractérisé en ce que** le dispositif à faisceau laser (35) est déplaçable par rapport à la bande (3).

10. Procédé pour produire des sections de tube (12), qui comprennent du papier, pour la fabrication de sacs, dans lequel:
• on déroule une bande (3), en particulier une bande de papier, d'un rouleau avec au moins un dispositif de déroulement (2),
• on pratique des perforations dans la bande (3) avec au moins un dispositif de perforation (30), dans lequel les perforations s'étendent sur la bande (3) au moins transversalement (y) à la direction de transport (z) de celle-ci,
• on applique l'un sur l'autre les bords de la bande (3) pour la formation d'un tube (10) dans un dispositif de formation de tube (9), qui est disposé dans l'ordre de production après ledit au moins un dispositif de perforation (9),
• on détache des sections de tube individuelles (12) du tube (10) le long des perforations avec un dispositif d'individualisation,
• on dirige sur la bande (3) au moins un faisceau laser (39) d'au moins un dispositif à faisceau laser (35) dans le dispositif de perforation (9) afin de pratiquer les perforations,
**caractérisé en ce que** l'on conduit la bande (3) sur des dispositifs de guidage de bande ou de déviation de bande (32, 33), dont on fait varier la position relative par rapport au dispositif à faisceau laser (35), dans lequel on règle la distance entre la bande et le dispositif à faisceau laser et dans lequel on ne balaie avec le faisceau laser qu'un angle déterminé transversalement à la direction de transport de la bande.
